(19) Europäisches Patentamt European Patent Office Office européen des brevets

(11) **EP 4 783 403 A1**

(12) **EUROPEAN PATENT APPLICATION**
published in accordance with Art. 153(4) EPC

(43) Date of publication:
**29.07.2026 Bulletin 2026/31**

(21) Application number: **24870910.7**

(22) Date of filing: **26.09.2024**

(51) International Patent Classification (IPC):
*H02J 3/48* (2026.01)

(52) Cooperative Patent Classification (CPC):
**H02J 3/16; H02J 3/32; H02J 3/48; H02J 3/50**

(86) International application number:
**PCT/CN2024/121575**

(87) International publication number:
**WO 2025/067371 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 CN 202311279108**

(71) Applicants:
• **Contemporary Amperex Technology Co., Limited**
  **Ningde, Fujian 352100 (CN)**
• **Shanghai Jiao Tong University**
  **Shanghai 200240 (CN)**

(72) Inventors:
• **CAI, Xu**
  **Ningde, Fujian 352100 (CN)**

• **YU, Dongxu**
  **Ningde, Fujian 352100 (CN)**
• **ZHANG, Chen**
  **Ningde, Fujian 352100 (CN)**
• **LU, Yanhua**
  **Ningde, Fujian 352100 (CN)**
• **LI, Rui**
  **Ningde, Fujian 352100 (CN)**
• **LIANG, Liliuyuan**
  **Ningde, Fujian 352100 (CN)**
• **ZHANG, Yu**
  **Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **DYNAMIC VOLTAGE SUPPORT METHOD AND APPARATUS OF ENERGY STORAGE CONVERTER, DEVICE AND STORAGE MEDIUM**

(57) The present application provides a transient voltage support method and apparatus for an energy storage converter, a device, and a storage medium, relating to the technical field of grid-connected conversion. The transient voltage support method for the energy storage converter includes: obtaining preset reference value data and output electrical information of the energy storage converter; obtaining active power information, reactive power information, and voltage amplitude information of a grid connection point in response to the output electrical information; and obtaining grid connection control data of the energy storage converter in response to one or more of the preset reference value data, the active power information, the reactive power information, and the voltage amplitude information, and controlling the energy storage converter to perform transient voltage support control during grid connection conversion through the grid connection control data. The method can enhance the transient voltage support capability of the energy storage converter and improve the stability of grid connection control.

FIG. 1

**Description**

**CROSS-REFERENCE TO RELATED APPLICATIONS**

The present application claims priority to the Chinese patent application (application number: 2023112791084), filed on September 28, 2023 and entitled "TRANSIENT VOLTAGE SUPPORT METHOD AND APPARATUS FOR ENERGY STORAGE CONVERTER, DEVICE, AND STORAGE MEDIUM", which is incorporated herein by reference in its entirety.

**TECHNICAL FIELD**

The present application relates to the technical field of grid-connected conversion, and more specifically, to a transient voltage support method and an apparatus for an energy storage converter, a device, and a storage medium.

**BACKGROUND**

Currently, with the continuous development of new energy generation technologies, the application of distributed generation technology and microgrid technology is becoming increasingly widespread. In modern power systems utilizing distributed generation or microgrid technologies, power energy storage technology can enhance power supply reliability and flexibility, and play a very important role in the new power system. An energy storage converter serves as the grid-connected interface for energy storage equipment, such as electrochemical energy storage devices.

Generally, an energy storage converter controlled by a vector control method can adjust the magnitude and angle of the output voltage or frequency output by the energy storage converter. However, the vector control method relies on the grid to generate frequency and internal electromotive force. In contrast, an energy storage converter controlled by a self-synchronous voltage source can autonomously construct frequency and internal power supply. However, when the grid experiences transient low voltage or transient overvoltage due to reasons such as short circuits or direct current blocking, the energy storage converter is prone to several issues, including but not limited to overcurrent, excessively low or high voltage at a grid connection point, power angle oscillation, and instability. These issues not only pose risks to equipment safety but also adversely affect the transient processes of the grid.

**SUMMARY**

The purpose of the present application is to provide a transient voltage support method and an apparatus for an energy storage converter, a device, and a storage medium, which can enhance the transient voltage support capability of the energy storage converter and improve the stability of grid connection control.

According to a first aspect, the present application provides a transient voltage support method for an energy storage converter, including:

obtaining preset reference value data and output electrical information of the energy storage converter;

obtaining active power information, reactive power information, and voltage amplitude information of a grid connection point in response to the output electrical information; and

obtaining grid connection control data of the energy storage converter in response to one or more of the preset reference value data, the active power information, the reactive power information, and the voltage amplitude information, and controlling the energy storage converter to perform transient voltage support control during grid connection conversion through the grid connection control data.

In the above implementation process, the transient voltage support method for the energy storage converter is based on preset reference value data and output electrical information of the energy storage converter to obtain grid connection control data of the energy storage converter. By using the grid connection control data to limit a reference value of active power, applying damping to an active frequency control loop, dynamically modifying a reactive voltage droop coefficient, and actively limiting the output current of the converter, the energy storage converter can adaptively output the reactive power to support a voltage amplitude at the grid connection point. In addition, it can prevent the power angle acceleration process during transients, thereby avoiding power angle instability issues as much as possible, enhancing the transient voltage support capability of the energy storage converter, and improving the stability of grid connection control.

Further, the preset reference value data includes a reactive power reference value and a voltage amplitude reference value, and the grid connection control data includes an internal potential amplitude. The obtaining grid connection control data of the energy storage converter in response to one or more of the preset reference value data, the active power information, the reactive power information, and the voltage amplitude information includes:
obtaining the internal potential amplitude of the energy storage converter in response to the reactive power reference value, the voltage amplitude reference value, the reactive power information, and the voltage amplitude information.

In the above implementation process, the internal potential amplitude of the energy storage converter is calculated and obtained through the reactive power reference value, the voltage amplitude reference value, the reactive power information, and the voltage amplitude information, so that the energy storage converter participates in the grid connection conversion process through the internal potential amplitude of the energy storage converter, controlling the on and off switching signals of power electronic switches in the energy storage converter to improve the stability of grid connection control.

Further, the preset reference value data also includes an active power reference value. The method further includes:
obtaining an active power limit value in response to the active power reference value.

In the above implementation process, a limiting operation is performed on the active power reference value of the energy storage converter through the active power limit value to prevent the active power reference value from exceeding a threshold, further improving the stability of grid connection control.

Further, the grid connection control data includes frequency information and phase angle information. The obtaining grid connection control data of the energy storage converter in response to one or more of the preset reference value data, the active power information, the reactive power information, and the voltage amplitude information includes:
obtaining the frequency information and phase angle information of the energy storage converter in response to the active power limit value and the active power information.

In the above implementation process, the frequency information and phase angle information of the energy storage converter are calculated and obtained through the active power limit value and the active power information, so that the energy storage converter participates in the grid connection conversion process through the frequency information and phase angle information of the energy storage converter, controlling the on and off switching signals of power electronic switches in the energy storage converter to improve the stability of grid connection control.

Further, the obtaining the frequency information and phase angle information of the energy storage converter in response to the active power limit value and the active power information includes:

obtaining the frequency information of the energy storage converter by performing rotor simulation in response to a droop control output signal, a transient droop control output signal, the active power limit value, and the active power information; and
obtaining the droop control output signal, the transient droop control output signal, and the phase angle information of the energy storage converter in response to the frequency information.

Further, the method also includes:

obtaining current limit value information of the energy storage converter; and
determining the active power limit value based on the voltage amplitude information, the current limit value information, and the reactive power information, where the active power limit value includes an upper limit and a lower limit.

In the above implementation process, the active power limit value is calculated and obtained through the voltage amplitude information, the current limit value information, and the reactive power information to prevent the active power reference value from exceeding a threshold, further improving the stability of grid connection control.

Further, the obtaining the internal potential amplitude of the energy storage converter in response to the reactive power reference value, the voltage amplitude reference value, the reactive power information, and the voltage amplitude information includes:

obtaining a reactive droop output signal in response to the reactive power reference value and the reactive power information;
obtaining a voltage droop output signal in response to the voltage amplitude reference value and the voltage amplitude information; and
obtaining the internal potential amplitude of the energy storage converter in response to the reactive droop output signal and the voltage droop output signal.

In the above implementation process, the internal potential amplitude is calculated and obtained through the reactive droop output signal and the voltage droop output signal, so that the energy storage converter participates in the grid connection conversion process through the internal potential amplitude of the energy storage converter, controlling the on and off switching signals of power electronic switches in the energy storage converter to improve the stability of grid connection control.

Further, the grid connection control data includes one or more of internal potential amplitude, frequency information, and phase angle information. The method further includes:
limiting a current amplitude output by the energy storage converter through inner loop control in response to one or more of the internal potential amplitude, the frequency information, and the phase angle information.

In the above implementation process, the control method of the energy storage converter limits the current amplitude output by the energy storage converter through an inner loop control module to prevent the output current of the energy storage converter from exceeding a threshold.

Further, the output electrical information of the energy storage converter includes output voltage information and output current information. The method further includes:

obtaining a current command value in response to the output voltage information, phase information, and the internal potential amplitude; and
limiting the current command value to obtain a current reference value.

Further, the method also includes:
performing closed-loop control on the output current information based on the current reference value.

According to a second aspect, the present application provides a transient voltage support apparatus for an energy storage converter, including:

an acquisition unit, configured to acquire preset reference value data and output electrical information of the energy storage converter;
a grid connection point unit, configured to obtain active power information, reactive power information, and voltage amplitude information of a grid connection point in response to the output electrical information; and
a grid connection control unit, configured to obtain grid connection control data of the energy storage converter in response to one or more of the preset reference value data, the active power information, the reactive power information, and the voltage amplitude information, and to control the energy storage converter to perform transient voltage support control during grid connection conversion through the grid connection control data.

Further, the preset reference value data includes a reactive power reference value and a voltage amplitude reference value, and the grid connection control data includes an internal potential amplitude. The grid connection control unit is further configured to obtain the internal potential amplitude of the energy storage converter in response to the reactive power reference value, the voltage amplitude reference value, the reactive power information, and the voltage amplitude information.

Further, the preset reference value data also includes an active power reference value, and the grid connection control unit is further configured to obtain an active power limit value in response to the active power reference value.

Further, the grid connection control data includes frequency information and phase angle information, and the grid connection control unit is further configured to obtain the frequency information and phase angle information of the energy storage converter in response to the active power limit value and the active power information.

Further, the grid connection control unit is further configured to obtain the frequency information of the energy storage converter by performing rotor simulation in response to a droop control output signal, a transient droop control output signal, the active power limit value, and the active power information; and to obtain the droop control output signal, the transient droop control output signal, and the phase angle information of the energy storage converter in response to the frequency information.

Further, the acquisition unit is further configured to obtain current limit value information of the energy storage converter; and to determine the active power limit value based on the voltage amplitude information, the current limit value information, and the reactive power information, where the active power limit value includes an upper limit and a lower limit.

Further, the grid connection control unit is further configured to obtain a reactive droop output signal in response to the reactive power reference value and the reactive power information; to obtain a voltage droop output signal in response to the voltage amplitude reference value and the voltage amplitude information; and to obtain the internal potential amplitude of the energy storage converter in response to the reactive droop output signal and the voltage droop output signal.

Further, the grid connection control data includes one or more of internal potential amplitude, frequency information, and phase angle information, and the grid connection control unit is further configured to limit the current amplitude output by the energy storage converter through inner loop control in response to one or more of the internal potential amplitude, the frequency information, and the phase angle information.

Further, the output electrical information of the energy storage converter includes output voltage information and output current information, and the grid connection control unit is further configured to obtain a current command value in response to the output voltage information, the phase information, and the internal potential amplitude; and to limit the current command value to obtain a current reference value.

Further, the grid connection control unit is further configured to perform closed-loop control on the output current information based on the current reference value.

According to a third aspect, the present application provides a control device for an energy storage converter, including: a memory, a processor, and a computer program stored in the memory and executable on the processor, where the processor, when executing the computer program, implements the steps of the method according to any one of the first aspect.

According to a fourth aspect, the present application provides a computer-readable storage medium, where instructions are stored on the computer-readable storage medium, and when the instructions are executed on a computer, the computer performs the method according to any one of the first aspect.

According to a fifth aspect, the present application provides a computer program product, where when the computer program product is executed on a computer, the computer performs the method according to any one of the first aspect.

Other features and advantages of the present application will be set forth in the following specification, or some features and advantages may be inferred or unequivocally determined from the specification, or may be learned by implementing the above-disclosed technology of the present application.

To make the above objectives, features, and advantages of the present application clearer and more understandable, examples are given hereinafter, and the detail description is made as below with reference to the accompanying drawings and diagrams.

## DESCRIPTION OF DRAWINGS

To describe the technical solutions in embodiments of the present application more clearly, the following briefly describes the accompanying drawings required for describing some embodiments of the present application. It is appreciated that the accompanying drawings below show merely some embodiments of the present application and thus should not be considered as limitations on the scope. Persons of ordinary skill in the art may still derive other related drawings from the accompanying drawings without creative efforts.

FIG. 1 is a schematic flowchart of a transient voltage support method for an energy storage converter provided by an embodiment of the present application;

FIG. 2 is a flowchart of an implementation process of a transient voltage support method for an energy storage converter provided by an embodiment of the present application;

FIG. 3 is a flowchart of another implementation process of a transient voltage support method for an energy storage converter provided by an embodiment of the present application;

FIG. 4 is a schematic diagram of a network topology for grid connection control of a self-synchronous voltage source based on an energy storage converter provided by an embodiment of the present application;

FIG. 5 is a schematic diagram of simulation results using a conventional self-synchronous voltage source control strategy under a low-voltage fault provided by an embodiment of the present application;

FIG. 6 is a schematic diagram of simulation results using a transient voltage support control method for an energy storage converter under a low-voltage fault provided by an embodiment of the present application;

FIG. 7 is a schematic diagram of simulation results using a self-synchronous voltage source control strategy under a transient high-voltage condition provided by an embodiment of the present application;

FIG. 8 is a schematic diagram of simulation results using a transient voltage support control method for an energy storage converter under a transient high-voltage condition provided by an embodiment of the present application;

FIG. 9 is a structural block diagram of a transient voltage support apparatus for an energy storage converter provided by an embodiment of the present application; and

FIG. 10 is a structural block diagram of a control device for an energy storage converter provided by an embodiment of the present application.

## DETAILED DESCRIPTION OF EMBODIMENTS

The following describes the technical solutions in the embodiments of the present application with reference to the accompanying drawings in the embodiments of the present application.

It should be noted that similar reference numerals and letters indicate similar items in the following drawings, and therefore once an item is defined in one drawing, it does not need to be further defined or explained in the subsequent drawings. In addition, in the description of the present application, the terms "first", "second", and the like are merely intended for distinctive description, and shall not be understood as an indication or implication of relative importance.

An energy storage converter may include one or more grid-connected interfaces, through which an electrochemical energy storage apparatus, a new energy generation device, and the like can be connected to the grid. An energy storage converter controlled by a self-synchronous voltage source can autonomously construct frequency and internal potential, whereas traditional vector control methods rely on the grid for generation. Therefore, self-synchronous voltage sources play an important role in addressing issues such as voltage exceedance, insufficient reactive power, wide-frequency oscillation, and synchronization instability caused by characteristics such as "low inertia" and "low short-circuit ratio" in areas with high penetration of new energy.

However, when a self-synchronous voltage source is used to control an energy storage converter, due to the very limited current tolerance capacity of the energy storage converter, the ability to output reactive power is limited by its current tolerance capacity. When the grid experiences low voltage or overvoltage, its transient support capability for the voltage amplitude at the grid connection point is limited. Within the constrained current output range, effectively supporting the voltage amplitude at the grid connection point while ensuring that the energy storage converter does not experience power angle oscillation or instability is a technically challenging issue to achieve at present.

To address the above issues, an embodiment of the present application proposes a transient voltage support method for an energy storage converter. The execution entity of this method may be a control device of the energy storage converter or a power energy storage system. The transient voltage support method for the energy storage converter is based on preset reference value data and output electrical information of the energy storage converter to obtain grid connection control data of the energy storage converter. By using the grid connection control data to implement measures such as limiting the reference value of active power, applying damping to the active frequency control loop, dynamically modifying the reactive voltage droop coefficient, and actively limiting the output current of the converter, the energy storage converter can adaptively output the reactive power to support the voltage amplitude at the grid connection point. In addition, this can prevent the power angle acceleration process during transients, thereby avoiding power angle instability issues as much as possible, enhancing the transient voltage support capability of the energy storage converter, and improving the stability of grid connection control.

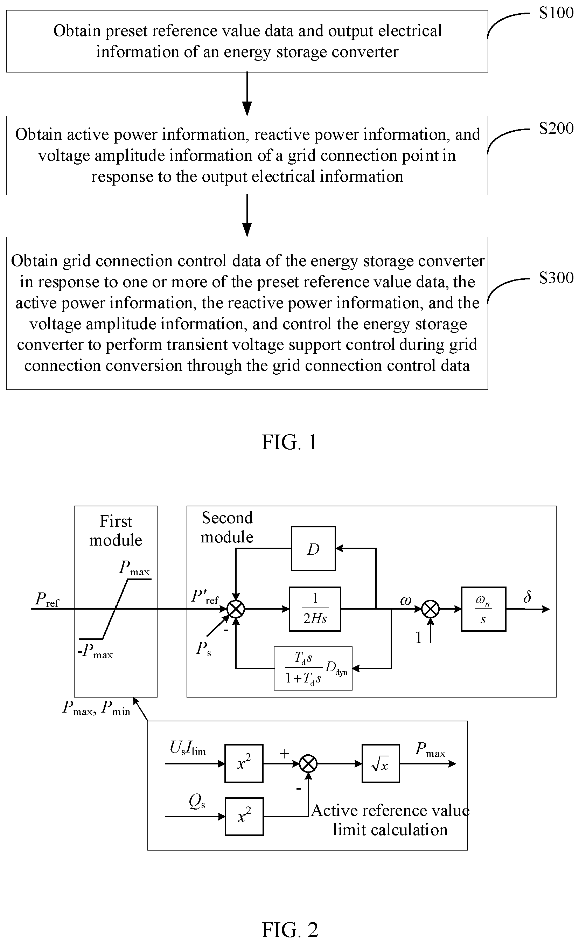

Referring to FIG. 1, FIG. 1 is a schematic flowchart of a transient voltage support method for an energy storage converter provided by an embodiment of the present application. The transient voltage support method for the energy storage converter includes the following steps:

S100: Obtain preset reference value data and output electrical information of the energy storage converter;

S200: Obtain active power information, reactive power information, and voltage amplitude information of a grid connection point in response to the output electrical information;

S300: Obtain grid connection control data of the energy storage converter in response to one or more of the preset reference value data, the active power information, the reactive power information, and the voltage amplitude information, and control the energy storage converter to perform transient voltage support control during grid connection conversion through the grid connection control data.

For example, the preset reference value data in the embodiment of the present application may include an active power reference value, a reactive power reference value, a voltage amplitude reference value, and the like. Thus, based on the active power reference value, the reactive power reference value, and the voltage amplitude reference value, corresponding electrical parameters can be limited or subjected to other operations.

The output electrical information of the energy storage converter includes output current information and output voltage information of the energy storage converter at the grid connection point. The transient voltage support method for the energy storage converter is based on preset reference value data and output electrical information of the energy storage converter to obtain grid connection control data of the energy storage converter. Through the grid connection control data, measures such as limiting the reference value of active power, applying damping to the active frequency control loop, dynamically modifying the reactive voltage droop coefficient, and actively limiting the output current of the converter are implemented. This not only enables the energy storage converter to adaptively output the reactive power to support the voltage amplitude at the grid connection point but also prevents the power angle acceleration process during transients, thereby avoiding power angle instability issues as much as possible, enhancing the transient voltage support capability of the energy storage converter, and improving the stability of grid connection control.

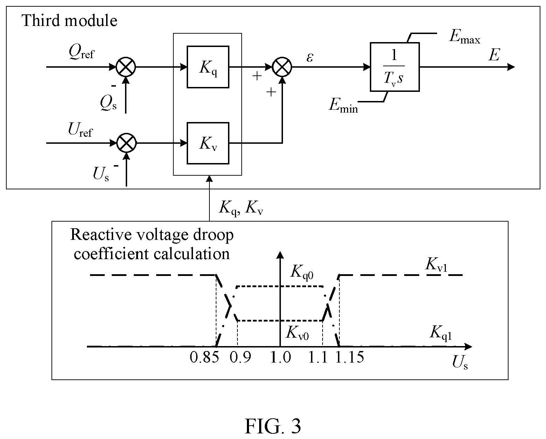

Referring to FIG. 2 and FIG. 3, FIG. 2 is a flowchart of an implementation process of a transient voltage support method for an energy storage converter provided by an embodiment of the present application, and FIG. 3 is a flowchart of another implementation process of a transient voltage support method for an energy storage converter provided by an embodiment of the present application. The transient voltage support method for the energy storage converter is applied to the following three modules (a first module, a second module, and a third module):

The first module: Calculate a limit value of the active power reference value based on the voltage amplitude information $U_s$ of the energy storage converter at the grid connection point, current limit value information $I_{lim}$, and reactive

power information $Q_s$ at the grid connection point. The calculation formula is:

$$P\min\begin{cases} \dfrac{1}{\sqrt{(U_s I_{\lim})^2 - Q_s^2}}, & 0.9 \leqslant U_s \leqslant 1.1 \\ & U_s < 0.9 \text{ or } U_s > 1.1 \end{cases}_{max};$$

where

in the formula: $P_{max}$ represents an upper limit of the active power reference value, $P_{min}$ represents a lower limit of the active power reference value, $U_s$ represents the voltage amplitude information at the grid connection point, $I_{lim}$ represents the current limit value information of the energy storage converter, and $Q_s$ represents the reactive power information at the grid connection point.

The second module includes the following sub-modules: (1) a rotor simulation sub-module; (2) a droop control sub-module; (3) a transient droop control sub-module; and (4) a phase angle generation sub-module. Optionally, the transfer functions of the sub-modules in the second module are:

the rotor simulation sub-module: $\omega = \dfrac{1}{2Hs} \cdot (P_{ref} - P_s - P_{d1} - P_{d2})$ ;

the droop control sub-module: $P_{d1} = D \cdot \omega$;

the transient droop control sub-module: $P_{d2} = \dfrac{T_d s}{1 + T_d s} D_{dyn} \cdot \omega$ ; and

the phase angle generation sub-module: $\delta = \dfrac{\omega_n}{s} \cdot \omega$ ; where

in the formula, $P_{ref}$ represents the active power reference value, $P_s$ represents the active power information at the grid connection point, $P_{d1}$ represents the output of the droop control sub-module, $P_{d2}$ represents the output of the transient droop control sub-module, $\omega$ represents the frequency information of the energy storage converter, $\omega$ also represents the output of the rotor simulation module, $\omega$ also represents the input to the droop control sub-module, the transient droop control sub-module, and the phase angle generation sub-module, $\delta$ represents the phase angle information of the energy storage converter, $\delta$ also represents the output of the phase angle generation sub-module, and $H, D, T_d, D_{dyn}, \omega_n$ represent preset parameters.

Optionally, the droop control sub-module in the second module is used to characterize the active frequency droop coefficient of the energy storage converter, that is, a *P-f* droop coefficient for primary frequency regulation; it also represents the damping of power angle oscillation. The transient droop control sub-module is used to increase the damping of power angle oscillation while maintaining the *P-f* droop coefficient unchanged.

In some possible implementations, the values of the parameters $H, D, T_d, D_{dyn}, \omega_n$ are respectively:

$$H = 5, \ D = 25, \ T_d = 10, \ T_{dyn} = 40, \ \omega_n = 100\pi .$$

$H$: represents an inertia time constant, typically set to 3s to 10s;
$D$: represents the *P-f* droop coefficient, typically set to 20 to 50;
$T_d$: represents the transient droop time constant, typically set to 2s to 10s;
$D_{dyn}$: represents the transient droop coefficient, recommended to be set to 40 to 100; and
$\omega_n$: represents the rated angular frequency of the grid, with a value of $100\pi = 314.1593$ rad/s.

It should be noted that the specific parameter settings mentioned above are for reference only and are not definitive limitations. Corresponding parameters can be adjusted based on actual conditions. Similarly, specific parameter settings mentioned below are also for reference only and are not definitive limitations. Corresponding parameters can be adjusted based on actual conditions, which are not described herein again.

The third module includes sub-modules: (1) a reactive droop sub-module; (2) a voltage droop sub-module; and (3) an internal potential adjustment sub-module. The transfer functions of each sub-module are:

the reactive droop sub-module: $\varepsilon_q = K_q \cdot (Q_{ref} - Q_s)$;

the voltage droop sub-module: $\varepsilon_v = K_v \cdot (U_{ref} - U_s)$; and

the internal potential adjustment sub-module: $E = \dfrac{1}{T_v s}(\varepsilon_q + \varepsilon_v)$; where

in the formula: $Q_{ref}$ represents the reactive power reference value, $Q_s$ represents the reactive power at the grid connection point, $\varepsilon_q$ represents the output of the reactive droop sub-module, $U_{ref}$ represents the voltage amplitude reference value, $U_s$ represents the voltage amplitude at the grid connection point, $\varepsilon_v$ represents the output of the voltage droop sub-module, $\varepsilon_q$ and $\varepsilon_v$ represent the inputs to the internal potential adjustment sub-module, $E$ represents the internal potential amplitude, $E$ also represents the output of the internal potential adjustment sub-module, and $K_q, K_v, T_v$ represent parameters, where $K_q$ is referred to as the reactive droop coefficient, and $K_v$ is referred to as the voltage droop coefficient.

In a possible implementation, the integrator of the internal potential adjustment sub-module is subjected to maximum and minimum limiting.

In possible implementations, the reactive droop coefficient $K_q$ and the voltage droop coefficient $K_v$ of the reactive droop sub-module and the voltage droop sub-module are functions of the voltage amplitude at the grid connection point.

In a possible implementation, the expression of the voltage amplitude function at the grid connection point is:

$$K_{q(v)} = \begin{cases} K_{q(v)0}: U_{s,2} \leqslant U_s \leqslant U_{s,3} \\ K_{q(v)1}: U_s < U_{s,1} \text{ or } U_s > U_{s,4} \\ \frac{K_{q(v)0} - K_{q(v)1}}{U_{s,2} - U_{s,1}} \cdot (U_s - U_{s,1}) + K_{q(v)1}: U_{s,1} \leqslant U_s < U_{s,2} \\ \frac{K_{q(v)1} - K_{q(v)0}}{U_{s,4} - U_{s,3}} \cdot (U_s - U_{s,3}) + K_{q(v)0}: U_{s,3} < U_s \leqslant U_{s,4} \end{cases} ;$$

where

in the formula: $K_{q(v)}$ refers to the reactive droop coefficient $K_q$ or the voltage droop coefficient $K_v$, $K_{q(v)0}$ and $K_{q(v)1}$ respectively refer to the normal and transient reactive droop coefficient or voltage droop coefficient, $U_{s,1} \sim U_{s,4}$ represent four increasing voltage amplitudes, and satisfy $U_{s,1} < U_{s,2} < 1 < U_{s,3} < U_{s,4}$.

In some embodiments, the values of related parameters are as follows:

$$K_{q0} = 1.0, \ K_{q1} = 0.1, \ K_{v0} = 0.1, \ K_{v1} = 1.0,$$

and

$$U_{s1} = 0.85, \ U_{s2} = 0.90, \ U_{s3} = 1.10, \ U_{s4} = 1.15;$$

where

in a possible implementation, the calculation explanation for $K_{q(v)}$ in the present application is as follows:

$K_{q0}$ and $K_{u0}$ are generally designed based on the reactive voltage control target of a virtual synchronous machine under normal conditions. For example, if the reactive voltage control target is constant reactive power, then $K_{q0} = 1$, $K_{u0} = 0$ can be set; if the control target is constant voltage, then $K_{q0} = 0$, $K_{u0} = 1$ can be set; and if the reactive voltage needs to satisfy a certain droop coefficient $K_{qu}$, then $K_{q0} : K_{u0} = K_{qu}$ can be set.

To achieve a better transient voltage support effect, $K_{q1}$ and $K_{u1}$ should satisfy: $K_{q1} : K_{u1} = 0 \sim 0.1$.

$U_{s2}$ and $U_{s3}$ are respectively the criteria for determining low voltage and overvoltage in the grid (voltage below 0.9 pu is determined as low voltage, and above 1.1 pu is determined as overvoltage).

Optionally, the purpose of setting $U_{s2}$ and $U_{s3}$ to 0.85 and 1.15 respectively is to allow the reactive voltage droop coefficient in FIG. 2 to change continuously, which can reduce the occurrence of oscillations. These two values are recommended values.

It should be noted that in practical applications, it is recommended to adopt these recommended values, otherwise, the results may be affected. Certainly, based on actual needs, the above recommended values can be adjusted accordingly, which are not described herein again.

In some embodiments, the preset reference value data includes a reactive power reference value and a voltage amplitude reference value, and the grid connection control data includes an internal potential amplitude. S300 of obtaining grid connection control data of the energy storage converter in response to one or more of the preset reference value data, the active power information, the reactive power information, and the voltage amplitude information includes:
obtain the internal potential amplitude of the energy storage converter in response to the reactive power reference value, the voltage amplitude reference value, the reactive power information, and the voltage amplitude information.

For example, the internal potential amplitude of the energy storage converter is calculated and obtained through the reactive power reference value, the voltage amplitude reference value, the reactive power information, and voltage amplitude information, so that the energy storage converter participates in the grid connection conversion process through the internal potential amplitude of the energy storage converter, controlling the on and off switching signals of power electronic switches in the energy storage converter to improve the stability of grid connection control.

In some embodiments, the preset reference value data also includes an active power reference value, and the transient voltage support method for the energy storage converter further includes:
obtain an active power limit value in response to the active power reference value.

For example, a limiting operation is performed on the active power reference value of the energy storage converter through the active power limit value to prevent the active power reference value from exceeding a threshold, further improving the stability of grid connection control.

In some embodiments, the grid connection control data includes frequency information and phase angle information. The obtain grid connection control data of the energy storage converter in response to one or more of the preset reference value data, the active power information, the reactive power information, and the voltage amplitude information includes:
obtain the frequency information and phase angle information of the energy storage converter in response to the active power limit value and active power information.

For example, the frequency information and phase angle information of the energy storage converter are calculated and obtained through the active power limit value and active power information, so that the energy storage converter participates in the grid connection conversion process through the frequency information and phase angle information of the energy storage converter, controlling the on and off switching signals of power electronic switches in the energy storage converter to improve the stability of grid connection control.

In some embodiments, the obtain the frequency information and phase angle information of the energy storage converter in response to the active power limit value and active power information includes:

obtain the frequency information of the energy storage converter by performing rotor simulation in response to a droop control output signal, a transient droop control output signal, the active power limit value, and the active power information; and
obtain the droop control output signal, the transient droop control output signal, and the phase angle information of the energy storage converter in response to the frequency information.

For example, in conjunction with the second module shown in FIG. 2, $P_{d1}$ represents the output of the droop control sub-module (a droop control output signal), and $P_{d2}$ represents the output of the transient droop control sub-module (a transient droop control output signal). Based on the above method, the frequency information and phase angle information of the energy storage converter are obtained.

In some embodiments, the transient voltage support method for the energy storage converter further includes:

obtain current limit value information of the energy storage converter; and
determine the active power limit value based on the voltage amplitude information, the current limit value information, and the reactive power information, where the active power limit value includes an upper limit and a lower limit.

For example, the active power limit value is calculated and obtained through the voltage amplitude information, current limit value information, and reactive power information to prevent the active power reference value from exceeding a threshold, further improving the stability of grid connection control.

In some embodiments, the obtain the internal potential amplitude of the energy storage converter in response to the reactive power reference value, the voltage amplitude reference value, the reactive power information, and the voltage amplitude information includes:

obtain a reactive droop output signal in response to the reactive power reference value and reactive power information;

obtain a voltage droop output signal in response to the voltage amplitude reference value and voltage amplitude information; and

obtain the internal potential amplitude of the energy storage converter in response to the reactive droop output signal and voltage droop output signal.

For example, in conjunction with the third module shown in FIG. 3, $\varepsilon_q$ represents the output of the reactive droop sub-module (a reactive droop output signal), and $\varepsilon_v$ represents the output of the voltage droop sub-module (a voltage droop output signal). The internal potential amplitude is calculated and obtained through the reactive droop output signal and voltage droop output signal, so that the energy storage converter participates in the grid connection conversion process through the internal potential amplitude of the energy storage converter, controlling the on and off switching signals of power electronic switches in the energy storage converter to improve the stability of grid connection control.

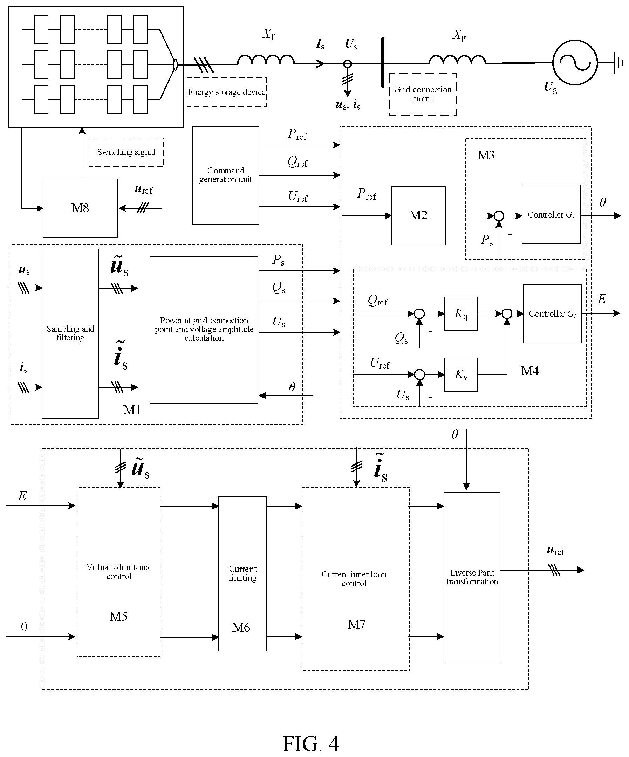

Referring to FIG. 4, FIG. 4 is a schematic diagram of a network topology for grid connection control of a self-synchronous voltage source based on an energy storage converter provided by an embodiment of the present application. As shown in FIG. 4, the grid connection control system of the self-synchronous voltage source includes a signal acquisition and processing module M1, an active power reference value limiting module M2, a power synchronization control module M3, a reactive voltage control module M4, a virtual admittance control module M5, a current limiting module M6, a current inner loop control module M7, and a modulation and drive module M8, where:

the signal acquisition and processing module M1 is configured to process detected current $i_s$ and voltage $u_s$ through sampling and filtering to obtain the three-phase voltage $\tilde{u}_s$ and three-phase current $\tilde{i}_s$ of the energy storage converter at the grid connection point, and to obtain active power information $P_s$, reactive power information $Q_s$, and voltage amplitude information $U_s$ at the grid connection point by calculating power at the grid connection point and voltage amplitude at the grid connection point;

the active power reference value limiting module M2 calculates the limit value of the active power reference value based on the voltage amplitude information $U_s$ at the grid connection point, current limit value $I_{lim}$, and the reactive power information $Q_s$ at the grid connection point;

the power synchronization control module M3 is configured to generate the reference angular frequency $\omega$ (frequency information) of the energy storage converter through the control loop based on a deviation between the active power reference value $P_{s0}$ generated by a command generation unit and the active power $P_s$ at the grid connection point, and further generate the reference angle $\theta$ (phase angle information) of the energy storage converter by integrating the reference angular frequency; and

the reactive voltage control module M4 is configured to use the weighted sum of the voltage deviation at the grid connection point (the deviation between a voltage reference value $U_{s0}$ at the grid connection point generated by the command generation unit and a voltage $U_s$ at the grid connection point acquired by a signal acquisition and processing module M4) and the reactive power deviation (the deviation between a reactive power reference value $Q_{s0}$ at the grid connection point generated by the command generation unit and a reactive power $Q_s$ at the grid connection point acquired by the signal acquisition and processing module M4) as an error signal, and to generate the reference value E of the internal potential amplitude through adjustment control of the reactive-voltage control parameter $K_v$.

The calculation formula for generating the reference value E of the internal potential amplitude can be expressed as:

$$T_v \dot{E} = K_v (U_{ref} - U_s) + K_q (Q_{ref} - Q_s),$$

where, E is the internal potential amplitude, $T_v$ is the time constant of integral control, which is used to represent the integration speed of the integrator; and the larger the time constant, the slower the integral control. $K_q$ and $K_v$ are the reactive droop coefficient and the voltage droop coefficient, respectively, which can be tuned according to the reactive-voltage control requirements.

Based on the reference angle $\theta$ generated by the power synchronization control module M3 and the reference value E of the internal potential amplitude generated by module M4, the reference voltage $u_{ref}$ of the energy storage converter is generated through a virtual admittance control M5, a current limiting control M6, the current inner loop control M7, and inverse Park transformation. This enables the control objectives of the power synchronization control module M3 and the reactive voltage control module M4, that is, reducing active power deviation, reactive power deviation, and voltage deviation at the grid connection point, to be achieved simultaneously.

The modulation and drive module M8 is configured to generate a drive signal based on the reference voltage $U_{ref}$

generated by the reference voltage generation module M3, controlling the on and off switching signals of power electronic switches in the energy storage converter, and controlling and regulating the SOC of the energy storage apparatus. This allows the voltage output by the energy storage apparatus to pass through the impedance $X_f$ of a filter inductor of the energy storage converter, the grid connection point, and the impedance $X_g$ of the inductive grid before being connected to the grid.

In a possible implementation, the signal acquisition and processing module M1 calculates, based on the output current of the energy storage converter and the voltage at the grid connection point, the active power $P_s$ at the grid connection point, the reactive power $Q_s$ at the grid connection point, and the voltage amplitude $U_s$ at the grid connection point. The active power reference value of the energy storage converter is limited through the active power reference value limiting module M2. Based on the active power and active reference value, the frequency and phase angle of the energy storage converter are generated through the power synchronization control module M3. Based on the reactive power and reactive reference value, the voltage amplitude, and the voltage amplitude reference value, the internal potential amplitude of the energy storage converter is generated through the reactive voltage control module M4.

In a possible implementation, the upper and lower limits of the active power limit value in the active power reference value limiting module M2 are determined by the following formula:

$$P\min \begin{cases} \dfrac{1}{\sqrt{(U_s I_{\lim})^2 - Q_s^2}}, & 0.9 \leqslant U_s \leqslant 1.1 \\ \sqrt{(U_s I_{\lim})^2 - Q_s^2}, & U_s < 0.9 \text{ or } U_s > 1.1 \end{cases}_{max} ;$$

where

in the formula: $P_{max}$ represents the upper limit of the active power reference value, $P_{min}$ represents the lower limit of the active power reference value, $U_s$ represents the voltage amplitude at the grid connection point, $I_{\lim}$ represents the current limit value of the energy storage converter, and $Q_s$ represents the reactive power at the grid connection point.

In possible implementations, the power synchronization control module M3 includes the following sub-modules: (1) a rotor simulation sub-module; (2) a droop control sub-module; (3) a transient droop control sub-module; and (4) a phase angle generation sub-module. The transfer functions of each sub-module are:

the rotor simulation sub-module: $\omega = \dfrac{1}{2Hs} \cdot (P_{ref} - P_s - P_{d1} - P_{d2})$ ;

the droop control sub-module: $P_{d1} = D \cdot \omega$;

the transient droop control sub-module: $P_{d2} = \dfrac{T_d s}{1 + T_d s} D_{dyn} \cdot \omega$ ; and

the phase angle generation sub-module: $\delta = \dfrac{\omega_n}{s} \cdot \omega$ ; where

in the formula: $P_{ref}$ represents the active power reference value, $P_s$ represents the active power at the grid connection point, $P_{d1}$ represents the output of the droop control sub-module, $P_{d2}$ represents the output of the transient droop control sub-module, $\omega$ represents the frequency of the energy storage converter, $\omega$ also represents the output of the rotor simulation module, $\omega$ also represents the input to the droop control sub-module, the transient droop control sub-module, and the phase angle generation sub-module, $\delta$ represents the phase angle of the energy storage converter, $\delta$ also represents the output of the phase angle generation sub-module, and $H, D, T_d, D_{dyn}, \omega_n$ represents parameters.

In a possible implementation, the reactive voltage control module M4 includes the following sub-modules: (1) a reactive droop sub-module; (2) a voltage droop sub-module; and (3) an internal potential adjustment sub-module. The transfer functions of each sub-module are:

the reactive droop sub-module: $\varepsilon_q = K_q \cdot (Q_{ref} - Q_s)$;

the voltage droop sub-module: $\varepsilon_v = K_v \cdot (U_{ref} - U_s)$; and

the internal potential adjustment sub-module: $E = \dfrac{1}{T_v s}(\varepsilon_q + \varepsilon_v)$ ; where

in the formula: $Q_{ref}$ represents the reactive power reference value, $Q_s$ represents the reactive power at the grid connection point, $\varepsilon_q$ represents the output of the reactive droop sub-module, $U_{ref}$ represents the voltage amplitude reference value, $U_s$ represents the voltage amplitude at the grid connection point, $\varepsilon_v$ represents the output of the voltage droop sub-module, $\varepsilon_q$ and $\varepsilon_v$ represent the inputs to the internal potential adjustment sub-module, $E$ represents the internal potential amplitude, $E$ also represents the output of the internal potential adjustment sub-module, $K_q, K_v, T_v$ represents parameters, where $K_q$ is referred to as the reactive droop coefficient, and $K_v$ is referred to as the voltage droop coefficient.

In a possible implementation, the reactive droop coefficient $K_q$ and the voltage droop coefficient $K_v$ of the reactive droop sub-module and the voltage droop sub-module are functions of the voltage amplitude at the grid connection point.

In a possible implementation, the control method of the energy storage converter limits the current amplitude output by the energy storage converter through an inner loop control module.

Optionally, the inner loop control module includes the following steps:

The virtual admittance control module M5 generates a current command value through the module M5 based on the voltage at the grid connection point, the phase information (θ), and the internal potential amplitude.

The current limiting module M6 limits the amplitude of the current command value through the module M6 based on the current command value, and outputs a current reference value.

The current inner loop control module M7 performs closed-loop control on the current magnitude through the module M7 based on the current reference value and the current.

In some embodiments, the grid connection control data includes one or more of internal potential amplitude, frequency information, and phase angle information, and the method further includes:

limit the current amplitude output by the energy storage converter through inner loop control in response to one or more of the internal potential amplitude, frequency information, and phase angle information.

For example, the control method of the energy storage converter limits the current amplitude output by the energy storage converter through an inner loop control module to prevent the output current of the energy storage converter from exceeding a threshold.

In some embodiments, the output electrical information of the energy storage converter includes output voltage information and output current information. The method further includes:

obtain a current command value in response to the output voltage information, phase information (θ), and internal potential amplitude; and
limit the current command value to obtain a current reference value.

In some embodiments, the transient voltage support method for the energy storage converter further includes: perform closed-loop control on the output current information based on the current reference value.

To verify the superiority of the transient voltage support method for the energy storage converter in the embodiments of the present application, simulation verification of the proposed self-synchronous voltage source control transient voltage support method of the present application is conducted in simulation software.

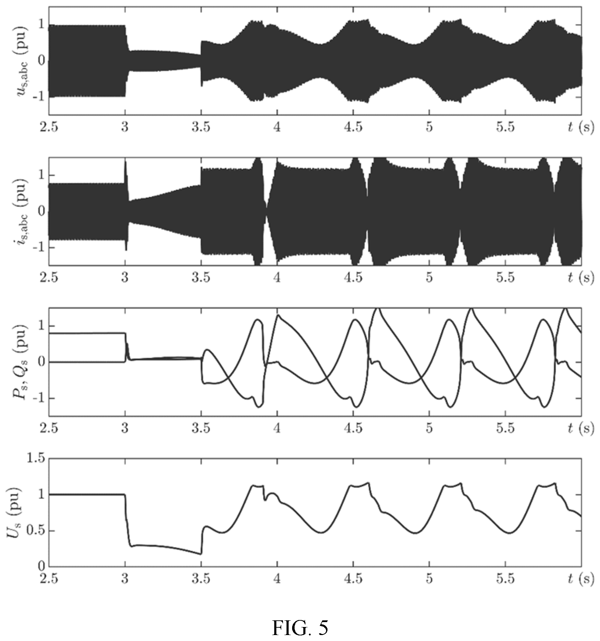

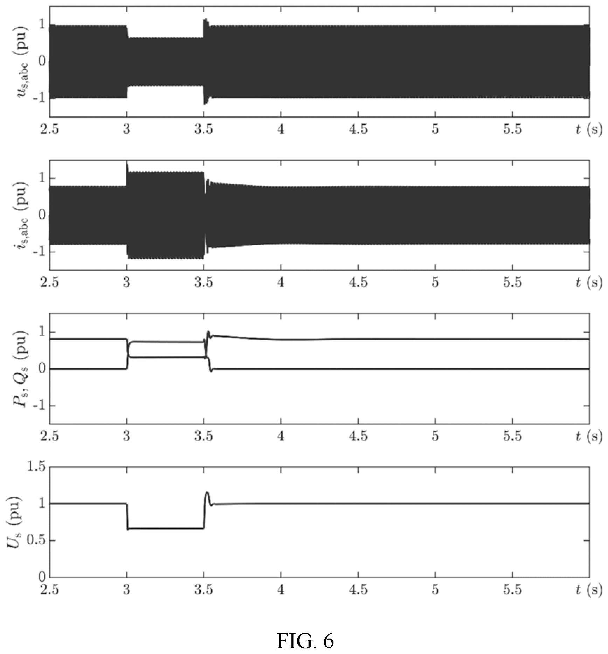

Referring to FIG. 5 and FIG. 6, FIG. 5 is a schematic diagram of simulation results using a conventional self-synchronous voltage source control strategy under a low-voltage fault provided by an embodiment of the present application, and FIG. 6 is a schematic diagram of simulation results using a transient voltage support control method for an energy storage converter under a low-voltage fault provided by an embodiment of the present application.

FIG. 6 shows the simulation results using the transient voltage support control method for the energy storage converter proposed in the present application under a low-voltage fault. The fault conditions in FIG. 6 are the same as those in FIG. 5, however, it can be seen that it has a significant support effect on the voltage at the grid connection point. Compared to FIG. 5, where the voltage at the grid connection point is below 0.3 pu and shows a continuous downward trend, and the voltage amplitude in FIG. 6 remains around 0.65 pu. In addition, after fault recovery, there is no oscillation as shown in FIG. 5, indicating that the proposed method can improve the stability of fault ride-through.

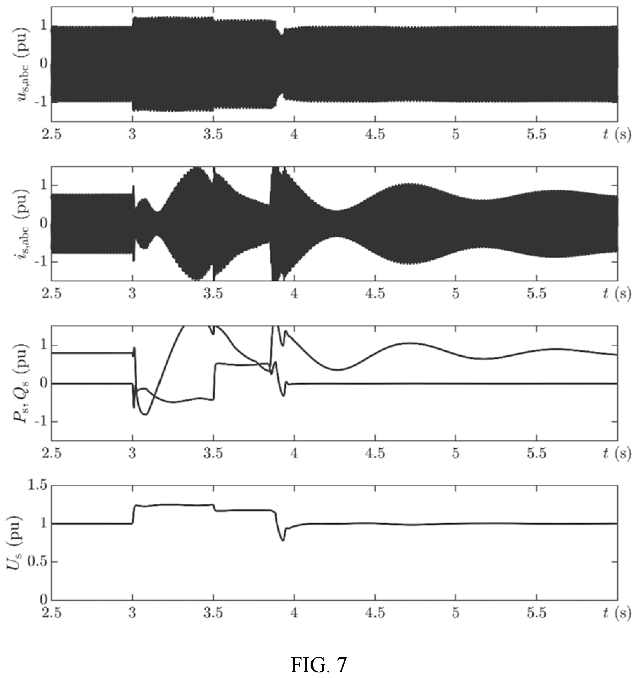

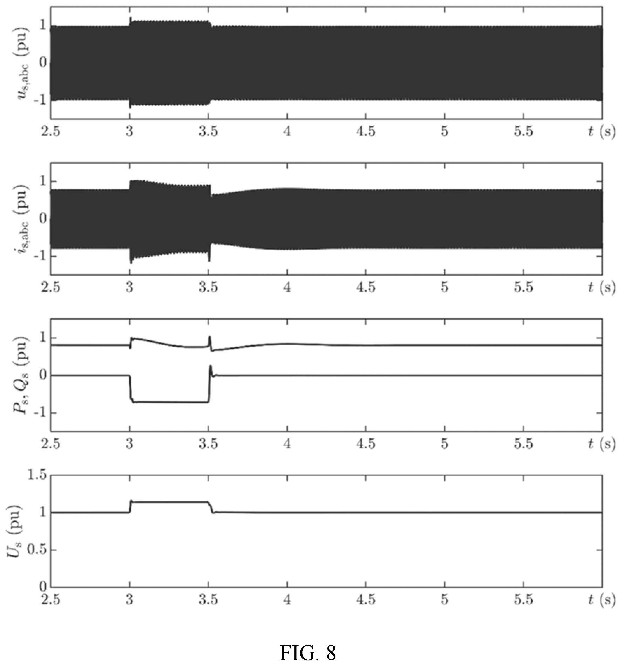

Referring to FIG. 7 and FIG. 8, FIG. 7 is a schematic diagram of simulation results using a self-synchronous voltage source control strategy under a transient high-voltage condition provided by an embodiment of the present application, and FIG. 8 is a schematic diagram of simulation results using a transient voltage support control method for an energy storage converter under a transient high-voltage condition provided by an embodiment of the present application.

FIG. 7 shows the simulation results using a conventional self-synchronous voltage source control strategy under a transient high-voltage condition. It can be seen that under the conventional self-synchronous voltage source control strategy, when the grid voltage rises to 1.4 pu at t= 3s and recovers after 0.5s, the voltage amplitude during the fault period is relatively high, about 1.25 pu, while the reactive power is almost zero. After the grid voltage recovers, the energy storage converter experiences significant oscillation and takes a long time to return to a steady state.

FIG. 8 shows the simulation results using the transient voltage support control method for the energy storage converter proposed in the present application under a transient high-voltage condition. The fault conditions are the same as those in FIG. 7, but it can be seen that it has a significant support effect on the voltage at the grid connection point. Compared to FIG. 7, where the voltage at the grid connection point during the fault period is about 1.25 pu, the voltage amplitude in FIG. 8 remains around 1.14 pu. In addition, after fault recovery, the relevant waveforms can enter a steady state in a shorter time, also indicating that the proposed method can improve the stability of fault ride-through.

It should be understood that the sequence numbers of the steps in the above embodiments do not mean execution sequences. The execution sequences of the processes should be determined according to functions and internal logic of the processes, and should not be construed as any limitation on the implementation processes of the embodiments of the present application.

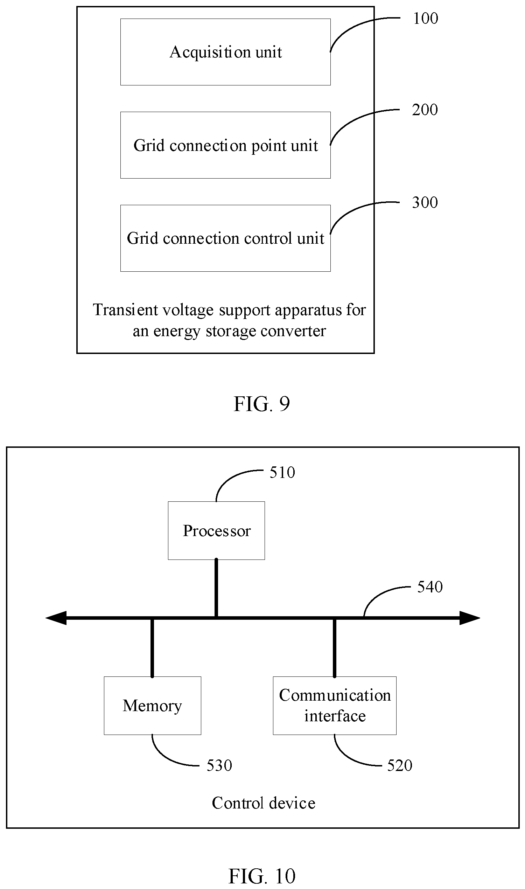

Referring to FIG. 9, FIG. 9 is a structural block diagram of a transient voltage support apparatus for an energy storage converter provided by an embodiment of the present application. The transient voltage support apparatus for the energy storage converter includes:

an acquisition unit 100, configured to acquire preset reference value data and output electrical information of the energy storage converter;

a grid connection point unit 200, configured to obtain active power information, reactive power information, and voltage amplitude information of a grid connection point in response to the output electrical information; and

a grid connection control unit 300, configured to obtain grid connection control data of the energy storage converter in response to one or more of the preset reference value data, the active power information, the reactive power information, and the voltage amplitude information, and to control the energy storage converter to perform transient voltage support control during grid connection conversion through the grid connection control data.

In some embodiments, the preset reference value data includes a reactive power reference value and a voltage amplitude reference value, and the grid connection control data includes an internal potential amplitude. The grid connection control unit 300 is further configured to obtain the internal potential amplitude of the energy storage converter in response to the reactive power reference value, the voltage amplitude reference value, the reactive power information, and the voltage amplitude information.

In some embodiments, the preset reference value data also includes an active power reference value, and the grid connection control unit 300 is further configured to obtain an active power limit value in response to the active power reference value.

In some embodiments, the grid connection control data includes frequency information and phase angle information, and the grid connection control unit 300 is further configured to obtain the frequency information and phase angle information of the energy storage converter in response to the active power limit value and the active power information.

In some embodiments, the grid connection control unit 300 is further configured to obtain the frequency information of the energy storage converter by performing rotor simulation in response to a droop control output signal, a transient droop control output signal, the active power limit value, and the active power information; and to obtain the droop control output signal, the transient droop control output signal, and the phase angle information of the energy storage converter in response to the frequency information.

In some embodiments, the acquisition unit 100 is further configured to obtain current limit value information of the energy storage converter; and to determine the active power limit value based on the voltage amplitude information, the current limit value information, and the reactive power information, where the active power limit value includes an upper limit and a lower limit.

In some embodiments, the grid connection control unit 300 is further configured to obtain a reactive droop output signal in response to the reactive power reference value and the reactive power information; to obtain a voltage droop output signal in response to the voltage amplitude reference value and the voltage amplitude information; and to obtain the internal potential amplitude of the energy storage converter in response to the reactive droop output signal and the voltage droop output signal.

In some embodiments, the grid connection control data includes one or more of internal potential amplitude, frequency information, and phase angle information, and the grid connection control unit 300 is further configured to limit the current amplitude output by the energy storage converter through inner loop control in response to one or more of the internal potential amplitude, the frequency information, and the phase angle information.

In some embodiments, the output electrical information of the energy storage converter includes output voltage information and output current information, and the grid connection control unit 300 is further configured to obtain a current command value in response to the output voltage information, the phase information, and the internal potential amplitude; and to limit the current command value to obtain a current reference value.

In some embodiments, the grid connection control unit 300 is further configured to perform closed-loop control on the output current information based on the current reference value.

It should be noted that the transient voltage support apparatus for the energy storage converter provided by the embodiments of the present application corresponds to the method embodiments shown in FIG. 1 to FIG. 8. To avoid repetition, the details are not described herein again.

The present application also provides a control device for an energy storage converter. Referring to FIG. 10, FIG. 10 is a structural block diagram of a control device for an energy storage converter provided by an embodiment of the present application. The control device may include a processor 510, a communication interface 520, a memory 530, and at least one communication bus 540. The communication bus 540 is used to realize direct connection communication between these components. The communication interface 520 of the control device in the embodiment of the present application is used for signaling or data communication with other node devices. The processor 510 may be an integrated circuit chip with signal processing capabilities.

The aforementioned processor 510 may be a general-purpose processor, including a central processing unit (CPU, Central Processing Unit), a network processor (NP, Network Processor), and the like; or may be a digital signal processor (DSP), an application-specific integrated circuit (ASIC), a field-programmable gate array (FPGA), or other programmable logic devices, a discrete gate or transistor logic device, or a discrete hardware component, or the like. The methods, steps, and logical block diagrams disclosed in the embodiments of the present application can be implemented or executed. The general-purpose processor may be a microprocessor, or the processor 510 may be any conventional processor.

The memory 530 may be, but is not limited to, a random access memory (RAM, Random Access Memory), a read only memory (ROM, Read Only Memory), a programmable read-only memory (PROM, Programmable Read-Only Memory), an erasable programmable read-only memory (EPROM, Erasable Programmable Read-Only Memory), or an electric erasable programmable read-only memory (EEPROM, Electric Erasable Programmable Read-Only Memory), and the like. The memory 530 stores computer-readable instructions, and when the computer-readable instructions are executed by the processor 510, the control device can perform the steps involved in the method embodiments of FIG. 1 to FIG. 8 described above.

Optionally, the control device may also include a memory controller and an input-output unit.

The memory 530, the memory controller, the processor 510, a peripheral interface, and the input-output unit are directly or indirectly electrically connected to each other to achieve data transmission or interaction. For example, these components may be electrically connected to each other through one or more communication buses 540. The processor 510 is used to execute executable modules stored in the memory 530, such as a software function module or a computer program included in the control device.

The input-output unit is used to provide a task to a user and set an optional start period or a preset execution time for the task to achieve interaction between the user and the server. The input-output unit may be, but is not limited to, a mouse, keyboard, and the like.

It can be understood that the structure shown in FIG. 10 is only illustrative, and the control device may include more or fewer components than those shown in FIG. 10 or have a configuration different from that shown in FIG. 10. The components shown in FIG. 10 may be implemented in hardware, software, or a combination thereof.

An embodiment of the present application also provides a storage medium, where instructions are stored on the storage medium, and when the instructions are executed on a computer, the computer program is executed by a processor, the method described in the method embodiments is implemented. To avoid repetition, details are not described herein again.

The present application also provides a computer program product, where when the computer program product is executed on a computer, the computer performs the method described in the method embodiments.

In some embodiments provided in the present application, it should be understood that the disclosed apparatus and method may be implemented in another manner. The apparatus embodiment described above is merely illustrative, for example, the flowcharts and block diagrams in the drawings illustrate probably implemented system architectures, functions and operations of the apparatus, method, and computer program product according to a plurality of embodiments of the present application. On this aspect, each block in the flowcharts or the block diagrams may represent part of a module, a program segment or code, and part of the module, the program segment or the code includes one or more executable instructions configured to realize a specified logical function. It should be also noted that in some alternative implementations, the functions marked in the blocks may also be realized in a sequence different from those marked in the accompanying drawings. For example, two continuous blocks may actually be executed substantially concurrently and may also be executed in a reverse sequence sometimes, which is determined by the involved functions. It is further to be noted that each block in the block diagrams and/or the flowcharts and a combination of the blocks in the block diagrams and/or the flowcharts may be implemented by a dedicated hardware-based system configured to execute a specified function or operation or may be implemented by a combination of a special hardware and a computer instruction.

In addition, each functional module in each embodiment of the present application may be integrated into an independent part, each module may also independently exist, and two or more than two modules may also be integrated into an independent part.

When realized in form of software functional module and sold or used as an independent product, the function may also be stored in a computer-readable storage medium. Based on such an understanding, the technical solutions of the present application substantially or parts making contributions to the conventional art or part of the technical solutions may be embodied in a form of a software product. The computer software product is stored in a storage medium and includes several instructions for instructing a computer device (which may be a personal computer, a server, a network device, or the like) to perform all or some of the steps of the methods described in the embodiments of the present application. The foregoing storage medium includes various media capable of storing program code, such as a USB flash drive, a removable hard disk, a read-only memory (ROM, Read-Only Memory), a random access memory (RAM, Random Access Memory), a magnetic disk, or an optical disc.

The foregoing descriptions are merely the embodiments of the present application, but are not intended to limit the protection scope of the present application. Persons skilled in the art understand that the present application may have various modifications and variations. Any modifications, equivalent replacements, and improvements made without departing from the spirit and principle of the present application shall fall within the protection scope of the present application. It should be noted that similar reference numerals and letters indicate similar items in the following drawings, and therefore once an item is defined in one drawing, it does not need to be further defined or explained in the subsequent drawings.

The foregoing descriptions are merely specific embodiments of the present application but are not intended to limit the protection scope of the present application. Any variation or replacement readily figured out by persons skilled in the art within the technical scope disclosed in the present application shall fall within the protection scope of the present application. Therefore, the protection scope of the present application shall be subject to the protection scope of the claims.

It should be noted that relational terms such as "first" and "second" herein are only used to distinguish one entity or operation from another entity or operation, and do not necessarily require or imply that there is any such actual relationship or order between these entities or operations. In addition, the terms "comprise", "include", or any other variations thereof are intended to cover non-exclusive inclusions, such that a process, method, article or device including a series of elements not only includes these elements, but also includes other elements which are not expressly listed, or further includes elements which are inherent to such process, method, article or device. Without more constraints, an element preceded by "includes a..." does not preclude the presence of other identical elements in the process, method, article, or device that includes the element.

## Claims

1. A transient voltage support method for an energy storage converter, comprising:

    obtaining preset reference value data and output electrical information of the energy storage converter;
    obtaining active power information, reactive power information, and voltage amplitude information of a grid connection point in response to the output electrical information; and
    obtaining grid connection control data of the energy storage converter in response to one or more of the preset reference value data, the active power information, the reactive power information, and the voltage amplitude information, and controlling the energy storage converter to perform transient voltage support control during grid connection conversion through the grid connection control data.

2. The transient voltage support method for an energy storage converter according to claim 1, wherein the preset reference value data comprises a reactive power reference value and a voltage amplitude reference value, and the grid connection control data comprises an internal potential amplitude; and the obtaining grid connection control data of the energy storage converter in response to one or more of the preset reference value data, the active power information, the reactive power information, and the voltage amplitude information comprises:
    obtaining the internal potential amplitude of the energy storage converter in response to the reactive power reference value, the voltage amplitude reference value, the reactive power information, and the voltage amplitude information.

3. The transient voltage support method for an energy storage converter according to claim 2, wherein the preset reference value data further comprises an active power reference value, and the method further comprises:
    obtaining an active power limit value in response to the active power reference value.

4. The transient voltage support method for an energy storage converter according to claim 3, wherein the grid connection control data comprises frequency information and phase angle information, and the obtaining grid connection control data of the energy storage converter in response to one or more of the preset reference value data, the active power information, the reactive power information, and the voltage amplitude information comprises: obtaining the frequency information and phase angle information of the energy storage converter in response to the active power limit value and the active power information.

5. The transient voltage support method for an energy storage converter according to claim 4, wherein the obtaining the frequency information and phase angle information of the energy storage converter in response to the active power limit value and the active power information comprises:

   obtaining the frequency information of the energy storage converter by performing rotor simulation in response to a droop control output signal, a transient droop control output signal, the active power limit value, and the active power information; and
   obtaining the droop control output signal, the transient droop control output signal, and the phase angle information of the energy storage converter in response to the frequency information.

6. The transient voltage support method for an energy storage converter according to claim 3, wherein the method further comprises:

   obtaining current limit value information of the energy storage converter; and
   determining the active power limit value based on the voltage amplitude information, the current limit value information, and the reactive power information, wherein the active power limit value comprises an upper limit and a lower limit.

7. The transient voltage support method for an energy storage converter according to claim 2, wherein the obtaining the internal potential amplitude of the energy storage converter in response to the reactive power reference value, the voltage amplitude reference value, the reactive power information, and the voltage amplitude information comprises:

   obtaining a reactive droop output signal in response to the reactive power reference value and the reactive power information;
   obtaining a voltage droop output signal in response to the voltage amplitude reference value and the voltage amplitude information; and
   obtaining the internal potential amplitude of the energy storage converter in response to the reactive droop output signal and the voltage droop output signal.

8. The transient voltage support method for an energy storage converter according to claim 1, wherein the grid connection control data comprises one or more of internal potential amplitude, frequency information, and phase angle information, and the method further comprises:
   limiting a current amplitude output by the energy storage converter through inner loop control in response to one or more of the internal potential amplitude, the frequency information, and the phase angle information.

9. The transient voltage support method for an energy storage converter according to claim 8, wherein the output electrical information of the energy storage converter comprises output voltage information and output current information, and the method further comprises:

   obtaining a current command value in response to the output voltage information, phase information, and the internal potential amplitude; and
   limiting the current command value to obtain a current reference value.

10. The transient voltage support method for an energy storage converter according to claim 9, wherein the method further comprises:
    performing closed-loop control on the output current information based on the current reference value.

11. A transient voltage support apparatus for an energy storage converter, comprising:

    an acquisition unit, configured to acquire preset reference value data and output electrical information of the energy storage converter;

a grid connection point unit, configured to obtain active power information, reactive power information, and voltage amplitude information of a grid connection point in response to the output electrical information; and a grid connection control unit, configured to obtain grid connection control data of the energy storage converter in response to one or more of the preset reference value data, the active power information, the reactive power information, and the voltage amplitude information, and to control the energy storage converter to perform transient voltage support control during grid connection conversion through the grid connection control data.

12. A control device for an energy storage converter, comprising: a memory, a processor, and a computer program stored in the memory and executable on the processor, wherein the processor, when executing the computer program, implements the steps of the transient voltage support method for an energy storage converter according to any one of claims 1 to 10.

13. A computer-readable storage medium, wherein instructions are stored on the computer-readable storage medium, and when the instructions are executed on a computer, the computer performs the transient voltage support method for an energy storage converter according to any one of claims 1 to 10.

Obtain preset reference value data and output electrical information of an energy storage converter — S100

Obtain active power information, reactive power information, and voltage amplitude information of a grid connection point in response to the output electrical information — S200

Obtain grid connection control data of the energy storage converter in response to one or more of the preset reference value data, the active power information, the reactive power information, and the voltage amplitude information, and control the energy storage converter to perform transient voltage support control during grid connection conversion through the grid connection control data — S300

FIG. 1

**First module**

$P_{ref}$

$P_{max}$

$-P_{max}$

$P_{max}, P_{min}$

**Second module**

$D$

$P'_{ref}$

$P_s$ —

$\dfrac{1}{2Hs}$

$\dfrac{T_d s}{1+T_d s} D_{dyn}$

$\omega$

$1$

$\dfrac{\omega_n}{s}$

$\delta$

$U_s I_{lim}$ → $x^2$ $+$

$Q_s$ → $x^2$ $-$

$\sqrt{x}$ → $P_{max}$

Active reference value limit calculation

FIG. 2

FIG. 3

FIG. 4

FIG. 5

FIG. 6

FIG. 7

FIG. 8

Transient voltage support apparatus for an energy storage converter

FIG. 9

FIG. 10

## INTERNATIONAL SEARCH REPORT

| International application No. |
| --- |
| **PCT/CN2024/121575** |

### A. CLASSIFICATION OF SUBJECT MATTER

H02J 3/48(2006.01)i

According to International Patent Classification (IPC) or to both national classification and IPC

### B. FIELDS SEARCHED

Minimum documentation searched (classification system followed by classification symbols)

IPC: H02J

Documentation searched other than minimum documentation to the extent that such documents are included in the fields searched

Electronic data base consulted during the international search (name of data base and, where practicable, search terms used)

CNABS, CNTXT, VEN, WOTXT, EPTXT, USTXT, CNKI, IEEE, BAIDU: 并网, 参考, 储能, 储能变换, 储能变流, 储能逆变, 电压, 内电势, 无功功率, 有功功率, 暂态电压, grid, reference, power conversion system, PCS, energy storage, internal potential, reactive power, active power, transient voltage

### C. DOCUMENTS CONSIDERED TO BE RELEVANT

| Category* | Citation of document, with indication, where appropriate, of the relevant passages | Relevant to claim No. |
| --- | --- | --- |
| X | 张宇等 (ZHANG, Yu et al.). "虚拟同步机电流受限暂态电压支撑机理与改进故障穿越控制研究 (Current-Constrained Transient Voltage Response Analysis and an Improved Fault-Ride Through Control of the Virtual Synchronous Generator)" 中国电机工程学报 (Proceedings of the CSEE), 29 June 2023 (2023-06-29), text, sections 1-4 | 1-13 |
| A | CN 108493984 A (ELECTRIC POWER RESEARCH INSTITUTE, STATE GRID SICHUAN ELECTRIC POWER CO., LTD. et al.) 04 September 2018 (2018-09-04) entire document | 1-13 |
| A | CN 110429655 A (STATE GRID LIAONING ELECTRIC POWER CO., LTD. et al.) 08 November 2019 (2019-11-08) entire document | 1-13 |
| A | CN 110571871 A (NORTHEAST ELECTRIC POWER UNIVERSITY) 13 December 2019 (2019-12-13) entire document | 1-13 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 December 2024** | **23 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/121575**

| C. DOCUMENTS CONSIDERED TO BE RELEVANT | | |
|---|---|---|
| Category* | Citation of document, with indication, where appropriate, of the relevant passages | Relevant to claim No. |
| A | US 11451065 B1 (KING FAHD UNIVERSITY OF PETROLEUM AND MINERALS) 20 September 2022 (2022-09-20) entire document | 1-13 |

Form PCT/ISA/210 (second sheet) (July 2022)

**INTERNATIONAL SEARCH REPORT**
Information on patent family members

International application No.

**PCT/CN2024/121575**

| Patent document cited in search report | | | Publication date (day/month/year) | Patent family member(s) | Publication date (day/month/year) |
|---|---|---|---|---|---|
| CN | 108493984 | A | 04 September 2018 | None | |
| CN | 110429655 | A | 08 November 2019 | None | |
| CN | 110571871 | A | 13 December 2019 | None | |
| US | 11451065 | B1 | 20 September 2022 | None | |

Form PCT/ISA/210 (patent family annex) (July 2022)

**EP 4 783 403 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023112791084